# EUROPEAN PATENT APPLICATION

(11) **EP 4 807 608 A1**
(43) Date of publication of application: **16.09.2026**
(21) Application number: 26160501.8
(22) Date of filing: 24.02.2026
(51) Int. Cl.: G06F 21/62, H04L 9/40, H04W 4/029

(54) **METHOD, APPARATUS, AND COMPUTER PROGRAM PRODUCT FOR DENSITY DRIVEN LOCATION DATA ANONYMIZATION**

(30) Priority: 14.03.2025 US 202519079989
(71) Applicant: HERE Global B.V., 5611 ZT Eindhoven (NL)
(72) Inventor: Vidyakina, Elena, Berlin (DE); Mumford, Elena, 6629 GZ Eindhoven (NL); Panszczyk, Artur, Czestochowa (PL)
(74) Representative: Sariot, Eray

(57) **Abstract**

Embodiments described herein relate to anonymizing of trajectories based on an anticipated probe data density at a location associated with the trajectory at a time corresponding to a time the trajectory was generated. Methods may include: identifying a plurality of geographic sub-areas of a geographical region; determining a plurality of timeslots associated with the geographical region using temporal partitions; identifying, for each timeslot of each geographic sub-area, a probe data density; determining anonymization parameters for an anonymization strategy based on the probe data density; receiving probe data as a trajectory from within a first geographic sub-area at a first timeslot; anonymizing the trajectory using the anonymization strategy with anonymization parameters associated with the probe data density corresponding to the first geographic sub-area at the first timeslot to form an anonymized trajectory; and providing the anonymized trajectory to a service provider for provision of location-based services.

## Description

### TECHNOLOGICAL FIELD

An example embodiment of the present disclosure relates to anonymizing location data, and more particularly, to adjusting anonymization parameters for probe data received within a geographic area at a given time based on a historical density of location data for the geographic area.

### BACKGROUND

Service providers and device manufacturers (e.g., wireless, cellular, navigation, etc.) are continually challenged to deliver value and convenience to consumers by providing compelling and useful services. Location-based services have been developed to provide users with useful and relevant information regarding route planning and to facilitate route guidance along the way. Substantially static data regarding roadways is used in conjunction with dynamic data, such as traffic, construction, and incident information to provide accurate and timely information to a driver to help route planning and decision making.

Data received from infrastructure monitoring systems and crowd-sourced data has become ubiquitous and may be available for facilitating route guidance and navigation system information. However, this data can be mined to provide various other services to users and to grow the availability of location-based services. The provision of location-based services is dependent upon understanding the location of a user requesting the services. Maintaining anonymity while also being able to access location-based services is a challenge as balancing privacy with a desire to provide contextually accurate location-based services generally provides trade-offs in one for the other.

### BRIEF SUMMARY

A method, apparatus, and computer program product are provided in accordance with an example embodiment described herein for anonymizing location data, and more particularly, for adjusting anonymization parameters for probe data received within a geographic area at a given time based on a historical density of location data for the geographic area. Embodiments provided herein include a method including: identifying a plurality of geographic sub-areas of a geographical region; determining a plurality of timeslots associated with the geographical region using temporal partitions; identifying, for each timeslot of each geographic sub-area, a probe data density; determining anonymization parameters for an anonymization strategy based on the probe data density; receiving probe data as a trajectory from within a first geographic sub-area at a first timeslot; anonymizing the trajectory using the anonymization strategy with anonymization parameters associated with the probe data density corresponding to the first geographic sub-area at the first timeslot to form an anonymized trajectory; and providing the anonymized trajectory to a service provider for provision of location-based services.

According to some embodiments the probe data density for each geographic sub-area at each timeslot is based at least in part on a historical probe data density for a respective geographic sub-area during a respective timeslot. According to certain embodiments determining a plurality of timeslots associated with the geographical region using temporal partitions includes: determining changes in probe data density based on at least one of time of day, day of week, or season of year; and establishing temporal partitions based on the at least one of time of day, day of week, or season of year and changes in probe data density.

The anonymization parameters of an example embodiment include one or more of a sub-trajectory length, a gap length, a sub-trajectory length range, a gap length range, an origin cut off size, an origin cut off size range, an end cut off size, or an end cut off size range. According to some embodiments the sub-trajectory length defines at least one of a maximum length for a sub-trajectory of the trajectory or a minimum gap length to be shared for the provision of location-based services. According to certain embodiments determining anonymization parameters based on the probe data density includes: determining a density range into which the probe data density falls; and determining anonymization parameters based on the density range.

Determining anonymization parameters based on the density range includes, in some embodiments: identifying the density range in a lookup table; and identifying anonymization parameters corresponding to the density range in the lookup table. According to certain embodiments the probe data density comprises at least one of a volume of probe data points, a number of trajectories, a number of unique device identifiers, or a number of unique session identifiers received within a predefined period of time.

According to some embodiments anonymizing the trajectory using the anonymization strategy with the anonymization parameters associated with the probe data density corresponding to the first geographic sub-area at the first timeslot to form an anonymized trajectory includes: splitting the trajectory into two or more sub-trajectories; and introducing a gap between the two or more sub-trajectories. According to certain embodiments determining the anonymization parameters based on the probe data density includes: determining anonymization parameters associated with relatively smaller sub-trajectories and relatively longer gaps in response to the probe data density being relatively low density; and determining anonymization parameters associated with relatively larger sub-trajectories and relatively larger gaps in response to the probe data density being relatively high density.

According to an example embodiment, an apparatus is provided including at least one processor and at least one memory including computer program code, the at least one memory and computer program code configured to, with the processor, cause the apparatus to at least: identify a plurality of geographic sub-areas of a geographical region; determine a plurality of timeslots associated with the geographical region using temporal partitions; identify, for each timeslot of each geographic sub-area, a probe data density; determine anonymization parameters for an anonymization strategy based on the probe data density; receive probe data as a trajectory from within a first geographic sub-area at a first timeslot; anonymize the trajectory using the anonymization strategy with anonymization parameters associated with the probe data density corresponding to the first geographic sub-area at the first timeslot to form an anonymized trajectory; and provide the anonymized trajectory to a service provider for provision of location-based services.

According to some embodiments the probe data density for each geographic sub-area at each timeslot is based on a historical probe data density for a respective geographic sub-area during a respective timeslot. Causing the apparatus of an example embodiment to determine a plurality of timeslots associated with the geographical region using temporal partitions includes causing the apparatus to: determine changes in probe data density based on at least one of time of day, day of week, or season of year; establish temporal partitions based on the at least one of time of day, day of week, or season of year and changes in probe data density.

According to certain embodiments the anonymization parameters include at least a sub-trajectory length and a gap. According to some embodiments the sub-trajectory length defines a maximum length for a sub-trajectory of the trajectory to be shared for the provision of location-based services. Causing the apparatus of some embodiments to determine anonymization parameters based on the probe data density includes causing the apparatus to: determine a density range into which the probe data density falls; determine anonymization parameters based on the density range.

Causing the apparatus of certain embodiments to determine anonymization parameters based on the density range includes causing the apparatus to: identify the density range in a lookup table; identify anonymization parameters corresponding to the density range in the lookup table. According to some embodiments the probe data density includes one or more of a volume of probe data points, a number of trajectories, a number of unique device identifiers, or a number of unique session identifiers received within a predefined period of time.

Causing the apparatus of some embodiments to anonymize the trajectory using the anonymization strategy with the anonymization parameters associated with the probe data density corresponding to the first geographic sub-area at the first timeslot to form an anonymized trajectory includes causing the apparatus to: split the trajectory into two or more sub-trajectories; and introduce a gap between the two or more sub-trajectories. According to some embodiments causing the apparatus to determine the anonymization parameters based on the probe data density includes causing the apparatus to: determine anonymization parameters associated with relatively smaller sub-trajectories and relatively longer gaps in response to the probe data density being relatively low density; and determine anonymization parameters associated with relatively larger sub-trajectories and relatively larger gaps in response to the probe data density being relatively high density.

Embodiments provided herein include a computer program product including at least one non-transitory computer-readable storage medium having computer-executable program code portions stored therein, the computer-executable program code portions including program code instructions configured to: identify a plurality of geographic sub-areas of a geographical region; determine a plurality of timeslots associated with the geographical region using temporal partitions; identify, for each timeslot of each geographic sub-area, a probe data density; determine anonymization parameters for an anonymization strategy based on the probe data density; receive probe data as a trajectory from within a first geographic sub-area at a first timeslot; anonymize the trajectory using the anonymization strategy with anonymization parameters associated with the probe data density corresponding to the first geographic sub-area at the first timeslot to form an anonymized trajectory; and provide the anonymized trajectory to a service provider for provision of location-based services.

According to certain embodiments the probe data density for each geographic sub-area at each timeslot is based on a historical probe data density for a respective geographic sub-area during a respective timeslot. The program instructions of certain embodiments to determine a plurality of timeslots associated with the geographical region using temporal partitions include program instructions to: determine changes in probe data density based on at least one of time of day, day of week, or season of year; and establish temporal partitions based on the at least one of time of day, day of week, or season of year and changes in probe data density. According to some embodiments the anonymization parameters include one or more of a sub-trajectory length, a gap length, a sub-trajectory length range, a gap length range, an origin cut off size, an origin cut off size range, an end cut off size, or an end cut off size range.

According to some embodiments the sub-trajectory length defines at least one of a maximum length for a sub-trajectory or a minimum gap length of the trajectory to be shared for the provision of location-based services. The program instructions of certain embodiments to determine anonymization parameters based on the probe data density include program instructions to: determine a density range into which the probe data density falls; and determine anonymization parameters based on the density range.

According to certain embodiments the program instructions to determine anonymization parameters based on the density range include program instructions to: identify the density range in a lookup table; and identify anonymization parameters corresponding to the density range in the lookup table. According to some embodiments the probe data density comprises a volume of probe data points received within a predefined period of time. The program instructions of certain embodiments to anonymize the trajectory using the anonymization strategy with the anonymization parameters associated with the probe data density corresponding to the first geographic sub-area at the first timeslot to form an anonymized trajectory include program instructions to: split the trajectory into two or more sub-trajectories; and introduce a gap between the two or more sub-trajectories.

Embodiments described herein further include a computer program product having computer-executable program code portions stored therein, the computer executable program code portions including program code instructions configured to perform any method described herein.

Embodiments provided herein include a method including: identifying a plurality of geographic sub-areas of a geographical region; determining a plurality of timeslots associated with the geographical region using temporal partitions; identifying, for each timeslot of each geographic sub-area, a probe data density; determining anonymization parameters for an anonymization strategy based on the probe data density; receiving probe data as a trajectory from within a first geographic sub-area at a first timeslot; anonymizing the trajectory using the anonymization strategy with anonymization parameters associated with the probe data density corresponding to the first geographic sub-area at the first timeslot to form an anonymized trajectory; and providing the anonymized trajectory to a service provider for provision of location-based services. Furthermore, any method embodiment described herein may also be a computer-implemented method.

Embodiments provided herein include an apparatus including: means for identifying a plurality of geographic sub-areas of a geographical region; means for determining a plurality of timeslots associated with the geographical region using temporal partitions; means for identifying, for each timeslot of each geographic sub-area, a probe data density; means for determining anonymization parameters for an anonymization strategy based on the probe data density; means for receiving probe data as a trajectory from within a first geographic sub-area at a first timeslot; means for anonymizing the trajectory using the anonymization strategy with anonymization parameters associated with the probe data density corresponding to the first geographic sub-area at the first timeslot to form an anonymized trajectory; and means for providing the anonymized trajectory to a service provider for provision of location-based services.

### BRIEF DESCRIPTION OF THE DRAWINGS

Having thus described example embodiments of the disclosure in general terms, reference will now be made to the accompanying drawings, which are not necessarily drawn to scale, and wherein:
Figure 1 illustrates a communications diagram in accordance with an example embodiment of the present disclosure;
Figure 2 is a block diagram of an apparatus that may be specifically configured for adjusting anonymization parameters for probe data received within a geographic area at a given time based on a historical density of location data for the geographic area in accordance with an example embodiment of the present invention;
Figure 3 illustrates a table of geographic sub-areas and timeslots according to an example embodiment of the present disclosure;
Figure 4 illustrates another table of geographic sub-areas and timeslots according to an example embodiment of the present disclosure;
Figure 5 illustrates a table of geographic sub-areas and timeslots along with corresponding anticipated probe data density according to an example embodiment of the present disclosure;
Figure 6 illustrates a table of density ranges and associated anonymization parameters according to an example embodiment of the present disclosure;
Figure 7 illustrates a table of density ranges and associated anonymization parameters according to an example embodiment of the present disclosure;
Figure 8 illustrates a table of clusters of geographic sub-areas and timeslots having similar density estimations according to an example embodiment of the present disclosure;
Figure 9 illustrates a table of biclusters and corresponding sets of anonymization parameters according to an example embodiment of the present disclosure;
Figure 10 illustrates a table of biclusters and corresponding individual anonymization parameters according to an example embodiment of the present disclosure; and
Figure 11 is a flowchart of a method for anonymizing trajectories based on an anticipated probe data density according to an example embodiment of the present disclosure.

### DETAILED DESCRIPTION

Some embodiments of the present disclosure will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present disclosure.

Mobility data may be defined as a set of points or probe data points, each of which includes at least a latitude, longitude, and timestamp. Additional information may be associated with the probe data points, such as speed, heading, or other data. Probe data points may include a device identifier or session identifier, where a series of probe data points from a particular device or session can be identified as a trajectory associated with the respective device. Optionally, a trajectory includes a set of probe data points, where probe data points of a trajectory may include a trajectory identifier that associates the probe data points with one another. Mobility data captured in trajectories can be partitioned in a set of trajectories (trajectory data), each of which identifies the movement of a user over time. Anonymization of trajectories may include rotating a device identifier, session identifier, or trajectory identifier periodically such that the device, session, or trajectory has a changing pseudonym. This anonymization may not be sufficient to satisfy anonymization standards or anonymization requirements, such that additional or alternative anonymization may be performed, such as splitting and gapping, origin/destination cropping, or the like, or any combination thereof.

Anonymization of trajectories while providing sufficient information for location-based services to be effective requires a balance to be struck between valuable trajectory information including location information of probe data points while also introducing ambiguity for anonymization, which in some embodiments includes the forming of gaps between sub-trajectories of a trajectory. These gaps provide distinction between different sub-trajectories and preclude adversaries from identifying a single trajectory belonging to a specific user and endeavor to preclude the identification of origins and destinations of a complete trajectory.

Anonymization of a trajectory through the splitting and gapping of a trajectory into a plurality of sub-trajectories and gaps faces unique challenges. Anonymization in many cases must be performed in real-time or near real-time (e.g., anonymized data must be released with a short delay). For this to happen, anonymization algorithms must decide which data points to drop and which ones to keep within a given maximum delay. According to some embodiments, anonymization may be performed post data collection, such as in a batch process for historical scenarios for analysis of location-based information for a given time period and/or location. Embodiments described herein are compatible with both real-time and historical probe data. Anonymizing of location and trajectory data may be performed through application of privacy-enhancing algorithms on the data. Such algorithms may include splitting and gapping of trajectories to subdivide trajectories into a number of shorter sub-trajectories that are pseudonymized and separated by gaps, where data from the original trajectory is dropped. Anonymization may include the placement of these gaps. Selection of these gaps in real-time or near-real-time is challenging. The selection of the gap must be performed as soon as the data point is available for real-time and near real-time anonymization which means processing each probe data point individually. If the delay is larger (e.g., one-minute or 'near-real-time'), the anonymization can be performed on chunks of data, such as of one-minute lengths for example. In this case, the anonymized version of the data in a chunk is released as soon as the chunk ends (e.g., every one minute).

Real-time, as described herein, includes performance of operations such as data transmission without any introduced delay, whereas near real-time includes performance of operations while some relatively small delay may be introduced. In the example embodiments described herein, near real-time can include a time frame of a few minutes. For example, in some embodiments, collection of data and transmitting may occur in data chunks, where the data chunk duration may be one or two minutes. This data may be transmitted in "near real-time" as in the data chunk may be transmitted with minimal delay after it is collected, such that the oldest probe data point in the data chunk is potentially as old as the data chunk duration plus a minimal processing/transmission delay, for example.

Splitting and gapping of trajectory data to split one trajectory into multiple sub-trajectories separated by a gap while dropping the data points within the gap helps to anonymize a trajectory. Determining how long the sub-trajectories are to be and how large the gaps are to be is subject to a variety of influencing factors. According to example embodiments described herein, these factors include in part a density of probe data and other trajectories within an area. When there is a high volume of probe data and trajectories within an area, the sub-trajectories can be longer and the gaps shorter without significant risk of re-identifying a data source of the sub-trajectory or matching sub-trajectories to a complete trajectory. Longer sub-trajectories and smaller gaps are desirable from a perspective of location-based services as these longer sub-trajectories provide greater location data for a user. Location-based service providers benefit from accurate location information, though also benefit from providing anonymization as the service provider fan promote user privacy. As such, location information with improved anonymization that retains significant location accuracy is highly desirable. In the absence of a high volume of probe data and trajectories, longer sub-trajectories and smaller gaps can lead to a low degree of anonymity. This is undesirable from a user perspective as their privacy is more likely to be compromised. However, smaller sub-trajectories and larger gaps may provide a lower degree of utility for location-based services as they can lack proper context and lead to erroneous or irrelevant information from location-based services.

While location-based services are desirable for both consumers and for service providers, consumers are often concerned with the amount of information shared about their routines and activities. Thus, while consumers and service providers want to engage with location-based services, consumers generally desire to maintain some degree of privacy. Further, regulatory requirements may necessitate anonymization of location data, such as the General Data Protection Regulation (GDPR) in Europe or the California Consumer Privacy Act (CCPA), where failure to appropriately anonymize data can result in significant penalties to the data provider.

Generally, the splitting and gapping process uses sub-trajectory sizes, gap sizes, and origin/destination cuts are uniform for all trajectories for a given service provider. Optionally, anonymization parameters may include a minimum and maximum sub-trajectory size (e.g., as measured in time, distance, or probe data point count), minimum and maximum gap size, minimum and maximum distance between gaps, and/or minimum and maximum origin and destination cut-off. However, as noted above, this process will provide greater privacy when coupled with a high density of trajectories, and lower privacy when in an area of sparse trajectories. Thus, the parameters of such an embodiment for splitting and gapping become unnecessarily strict (e.g., smaller sub-trajectories and larger gaps than necessary) when in areas of high trajectory density, and unnecessarily lenient (e.g., larger sub-trajectories and smaller gaps than necessary) when in areas of low trajectory density.

Embodiments described herein provide a method, apparatus, and computer program product that employs dynamic parameters for anonymization that are based on the historical probe data density for a geographic region and time period. Probe data density can include a data point count for a given area during a given time slot, a number of unique probe device identifiers during a time slot, a number of unique trajectories, or a number of unique session identifiers, for example. Probe data density may be a historical probe data density, a real-time probe data density, or a combination thereof (e.g. a hybrid probe data density), may be used to provide an estimate for the probe data density for a corresponding geographic region and time period for the respective probe data of the trajectory to be anonymized (e.g. a probe data density value corresponding to the location and timestamp of the probe data). The historical probe data density for a given geographic region and time period (e.g., time of day, day of week, season of year, etc.) may be observation data (e.g. of subjects at a location) collected from a previous time period (e.g. minute(s), hour(s), day(s), week(s), month(s), season(s), years(s) ago, etc.), aggregated (e.g. averaged, weighted, etc.) over multiple time periods, and may be obtained from a variety of sources (e.g. historical probe data, historical traffic data, census data, historical data/cellular network operator data, historical public transport/mobility data, etc.). The real-time probe data density may be observation data obtained from online sources (e.g. real-time traffic, data/cellular network operator data, connected vehicle data, traffic infrastructure data, etc.) which corresponds to the geographic region and time period for the respective probe data of the trajectory to be anonymized. The hybrid probe data density may be a combination of (weighted) historical and real-time probe, such that a historical probe data density can be supplemented with real-time or near real-time probe data density (e.g. probe data counts) to improve the accuracy of the probe data density which can account for anomalies relative to the historical probe data density. Regardless of the variety of probe data density, embodiments described herein adjust parameters for splitting and gapping anonymization of trajectories based on the density of data in a specifically tailored scenario ranging from season regularity to near real time. Embodiments create time-space partitions such that there is an ability to differentiate anonymization settings between blocks of the partitions. The time-space partitions are created based on the anticipated density within each block of the partitions derived from historical information.

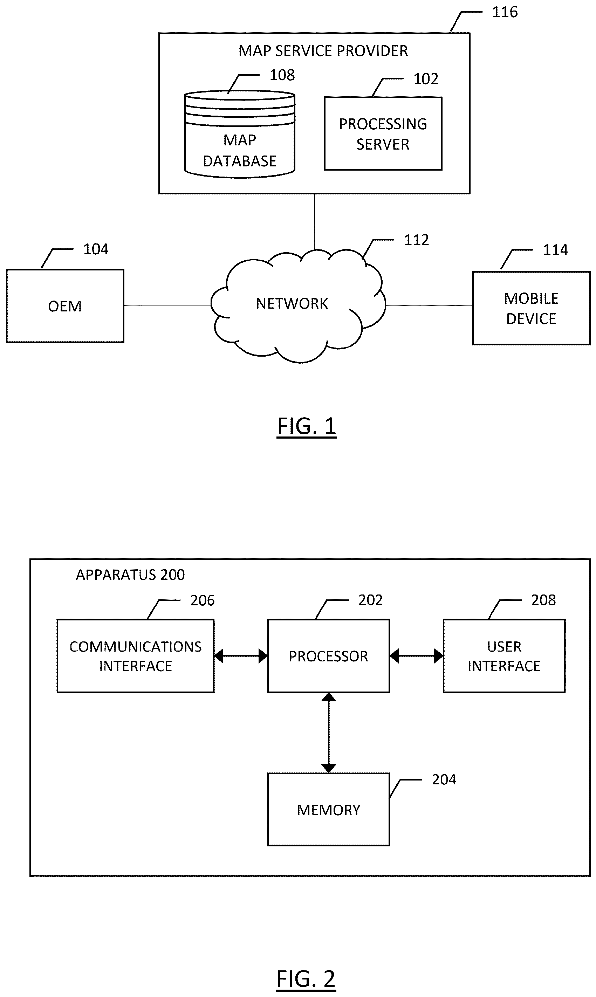

To provide an improved system for adjusting anonymization parameters for probe data received within a geographic area at a given time based on a historical density of location data for the geographic area, a system as illustrated in Figure 1 may be used. Figure 1 illustrates a communication diagram of an example embodiment of a system for implementing example embodiments described herein. The illustrated embodiment of Figure 1 includes a map service provider 116, a processing server 102 in data communication with an original equipment manufacturer (OEM) 104 and/or a geographic map database, e.g., map database 108 through a network 112, and one or more mobile devices 114. The mobile device 114 may be one form of a trajectory source, providing probe data forming a trajectory to any of the OEM 104, the Map Service provider 116, or any other service (not depicted) connected via network 112. The OEM may be one further form of a trajectory source from which a trajectory of a probe or mobile device is received. The trajectory source may optionally include third party service providers or app developers, for example. The mobile device 114 may be associated, coupled, or otherwise integrated with a vehicle, such as in a vehicle's head unit, infotainment unit, or an advanced driver assistance system (ADAS), for example. Additional, different, or fewer components may be provided. For example, many mobile devices 114 may connect with the network 112. The map service provider 116 may include computer systems and network of a system operator. The processing server 102 may include the map database 108, such as a remote map server. The network may be wired, wireless, or any combination of wired and wireless communication networks, such as cellular, Wi-Fi, internet, local area networks, or the like.

The OEM 104 may include a server and a database configured to receive probe data from vehicles or devices corresponding to the OEM. For example, if the OEM is a brand of automobile, each of that manufacturer's automobiles (e.g., mobile device 114) may provide probe data to the OEM 104 for processing. That probe data may be encrypted with a proprietary encryption or encryption that is unique to the OEM. The OEM may be the manufacturer or service provider for a brand of vehicle or a device. For example, a mobile device carried by a user (e.g., driver or occupant) of a vehicle may be of a particular brand or service (e.g., mobile provider), where the OEM may correspond to the particular brand or service. The OEM may optionally include a service provider to which a subscriber subscribes, where the mobile device 114 may be such a subscriber. While depicted as an OEM 104 in Figure 1, other entities may function in the same manner described herein with respect to the OEM. For example, independent location-based service providers or other entities may participate and contribute in the same manner as described herein with respect to an OEM. As such, the OEM 104 illustrated in Figure 1 is not limited to original equipment manufacturers, but may be any entity participating as described herein with respect to the OEMs.

The OEM 104 may be configured to access the map database 108 via the processing server 102 through, for example, a mapping application, such that the user equipment may provide navigational assistance to a user among other services provided through access to the map service provider 116. According to some embodiments, the map service provider 116 may function as the OEM, such as when the map service provider is a service provider to OEMs to provide map services to vehicles from that OEM. In such an embodiment, the map service provider 116 may or may not be the recipient of vehicle probe data from the vehicles of that manufacturer. Similarly, the map service provider 116 may provide services to mobile devices, such as a map services provider that may be implemented on a mobile device, such as in a mapping application. According to such an embodiment, the map service provider 116 may function as the OEM as the map service provider receives the probe data from the mobile devices of users as they travel along a road network.

The map database 108 may include node data, road segment data or link data, point of interest (POI) data, or the like. The map database 108 may also include cartographic data, routing data, and/or maneuvering data. According to some example embodiments, the road segment data records may be links or segments representing roads, streets, or paths, as may be used in calculating a route or recorded route information for determination of one or more personalized routes. The node data may be end points corresponding to the respective links or segments of road segment data. The road link data and the node data may represent a road network, such as used by vehicles, cars, trucks, buses, motorcycles, and/or other entities. Optionally, the map database 108 may contain path segment and node data records or other data that may represent pedestrian paths or areas in addition to or instead of the vehicle road record data, for example. The road/link segments and nodes can be associated with attributes, such as geographic coordinates, street names, address ranges, speed limits, turn restrictions at intersections, and other navigation related attributes, as well as POIs, such as fueling stations, hotels, restaurants, museums, stadiums, offices, auto repair shops, buildings, stores, parks, etc. The road/link segments may further include attributes indicating a Functional Class for a respective road/link segment. The functional class (or the class feature) may be a road type indicator that may reflect a traffic speed and a traffic volume, as well as the importance and connectivity of the road. The functional class of the first road link may be a numerical value ranging from 1 to 5. For example, the functional class "1" may indicate a road with high-volume traffic and maximum-speed traffic. The functional class "2" may indicate a road with a high volume and high-speed traffic. The functional class "3" may indicate a road with a high-volume traffic. The functional class "4" may indicate a road with a high-volume traffic at moderate speeds between neighborhoods and the functional class "5" may indicate a road whose volume and traffic flow may be below the level of any other functional class.

The map database 108 can include data about the POIs and their respective locations in the POI records. The map database 108 may include data about places, such as cities, towns, or other communities, and other geographic features such as bodies of water, mountain ranges, etc. Such place or feature data can be part of the POI data or can be associated with POIs or POI data records (such as a data point used for displaying or representing a position of a city). In addition, the map database 108 can include event data (e.g., traffic incidents, construction activities, scheduled events, unscheduled events, etc.) associated with the POI data records or other records of the map database 108. The map database 108 may further include information defining geographic areas according to further criteria, such as use/zoning designations (e.g. rural, industrial, urban, mixed-use, wildlife reserve, forest, etc.), postal codes, census/population information (e.g. population density), jurisdiction (town, city, county, state, region, country, etc.), environmental information (noise levels, pollution, air quality, weather, etc.) or the like. In some embodiments, the map database 108 may further include probe data density information, e.g. such as historical probe data density information obtained via example embodiments disclosed herein.

The map database 108 may be maintained by a content provider e.g., a map service provider. By way of example, the map service provider can collect geographic data to generate and enhance the map database 108. There can be different ways used by the map service provider to collect data. These ways can include obtaining data from other sources, such as municipalities or respective geographic authorities. In addition, the map service provider can employ field personnel to travel by vehicle along roads throughout the geographic region to observe features and/or record information about them, for example. Also, remote sensing, such as aerial or satellite photography, can be used to generate map geometries directly or through machine learning as described herein.

The map database 108 may be a master map database stored in a format that facilitates updating, maintenance, and development. For example, the master map database or data in the master map database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data may be compiled (such as into a platform specification format (PSF) format) to organize and/or configure the data for performing navigation-related functions and/or services, such as route calculation, route guidance, map display, speed calculation, distance and travel time functions, and other functions, by a navigation device, such as by mobile device 114, for example. The navigation-related functions can correspond to vehicle navigation, pedestrian navigation, or other types of navigation. While example embodiments described herein generally relate to vehicular travel, example embodiments may be implemented for bicycle travel along bike, watercraft travel along waterway navigational routes, pedestrian travel etc. The compilation to produce the end user databases can be performed by a party or entity separate from the map service provider. For example, a customer of the map service provider, such as a navigation device service provider or other end user device service provider, can perform compilation on a received map database in a delivery format to produce one or more compiled navigation databases.

As mentioned above, the server side map database 108 may be a master geographic database, but in alternate embodiments, a client side map database 108 may represent a compiled navigation database that may be used in or with end user devices (e.g., mobile device 114) to provide navigation and/or map-related functions. For example, the map database 108 may be used with the mobile device 114 to provide an end user with navigation features. In such a case, the map database 108 can be downloaded or stored on the end user device (mobile device 114) which can access the map database 108 through a wireless or wired connection, such as via a processing server 102 and/or the network 112, for example.

In one embodiment, the mobile device 114 can be an in-vehicle navigation system, such as an ADAS, a personal navigation device (PND), a portable navigation device, a cellular telephone, a smart phone, a personal digital assistant (PDA), a watch, a camera, a computer, and/or other device that can perform navigation-related functions, such as digital routing and map display. An end user can use the mobile device 114 for navigation and map functions such as guidance and map display, for example, and for determination of one or more personalized routes or route segments based on one or more calculated and recorded routes, according to some example embodiments.

An ADAS may be used to improve the comfort, efficiency, safety, and overall satisfaction of driving. Examples of such advanced driver assistance systems include semi-autonomous driver assistance features such as adaptive headlight aiming, adaptive cruise control, lane departure warning and control, curve warning, speed limit notification, hazard warning, predictive cruise control, adaptive shift control, among others. Other examples of an ADAS may include provisions for fully autonomous control of a vehicle to drive the vehicle along a road network without requiring input from a driver. Some of these advanced driver assistance systems use a variety of sensor mechanisms in the vehicle to determine the current state of the vehicle and the current state of the roadway ahead of the vehicle. These sensor mechanisms may include radar, infrared, ultrasonic, and vision-oriented sensors such as image sensors and light distancing and ranging (LiDAR) sensors.

Some advanced driver assistance systems may employ digital map data. Such systems may be referred to as map-enhanced ADAS. The digital map data can be used in advanced driver assistance systems to provide information about the road network, road geometry, road conditions, and other information associated with the road and environment around the vehicle. Unlike some sensors, the digital map data is not affected by the environmental conditions such as fog, rain, or snow. Additionally, the digital map data can provide useful information that cannot reliably be provided by sensors, such as curvature, grade, bank, speed limits that are not indicated by signage, lane restrictions, and so on. Further, digital map data can provide a predictive capability well beyond the driver's vision to determine the road ahead of the vehicle, around corners, over hills, or beyond obstructions. Accordingly, the digital map data can be a useful and sometimes necessary addition for some advanced driving assistance systems. In the example embodiment of a fully-autonomous vehicle, the ADAS uses the digital map data to determine a path along the road network to drive, such that accurate representations of the road are necessary, such as accurate representations of intersections and turn maneuvers there through.

The processing server 102 may receive probe data, directly or indirectly, from a mobile device 114, such as when the map service provider is functioning as the OEM 104. Optionally, the map service provider 116 may receive probe data indirectly from the mobile device 114, such as when the mobile device 114 provides probe data to the OEM 104, and the OEM provides certain elements of the probe data to the map service provider 116. The OEM 104 may anonymize the probe data or otherwise process the probe data to maintain privacy of a user of the mobile device 114 before providing the data to the map service provider 116. The mobile device 114 may include one or more detectors or sensors as a positioning system built or embedded into or within the interior of the mobile device 114. Alternatively, the mobile device 114 uses communications signals for position determination. The mobile device 114 may receive location data from a positioning system, such as a global positioning system (GPS), cellular tower location methods, access point communication fingerprinting, or the like. The server 102, either directly or indirectly, may receive sensor data configured to describe a position of a mobile device, or a controller of the mobile device 114 may receive the sensor data from the positioning system of the mobile device 114. The mobile device 114 may also include a system for tracking mobile device movement, such as rotation, velocity, or acceleration. Movement information may also be determined using the positioning system. The mobile device 114 may use the detectors and sensors to provide data indicating a location of a vehicle. This vehicle data, also referred to herein as "probe data", may be collected by any device capable of determining the necessary information, and providing the necessary information to a remote entity. The mobile device 114 is one example of a device that can function as a probe to collect probe data of a vehicle.

More specifically, probe data (e.g., collected by mobile device 114) may be representative of the location of a vehicle at a respective point in time and may be collected while a vehicle is traveling along a route. According to the example embodiment described below with the probe data being from motorized vehicles traveling along roadways, the probe data may include, without limitation, location data, (e.g. a latitudinal, longitudinal position, and/or height, GPS coordinates, proximity readings associated with a radio frequency identification (RFID) tag, or the like), rate of travel, (e.g. speed), direction of travel, (e.g. heading, cardinal direction, or the like), probe source identifier, (e.g. vehicle identifier, user identifier, or the like), a time stamp associated with the data collection, or the like. The mobile device 114, may be any device capable of collecting the aforementioned probe data. The probe source identifier can include a device identifier, a session identifier, a trajectory identifier, or the like that is coupled with each probe data point to enable a sequence of probe data points to be associated with one another in a trajectory. Some examples of the mobile device 114 may include specialized vehicle mapping equipment, navigational systems, mobile devices, such as phones or personal data assistants, or the like.

An example embodiment of a processing server 102 and/or an OEM 104 may be embodied in an apparatus as illustrated in Figure 2. The apparatus, such as that shown in Figure 2, may be specifically configured in accordance with an example embodiment of the present disclosure for anonymizing trajectories of mobile devices, and more particularly, to segmenting a trajectory and introducing gaps between the trajectory segments or sub-trajectories based on tailored use cases to retain portions of the trajectory that have higher utility. The apparatus may include or otherwise be in communication with a processor 202, a memory device 204, a communication interface 206, and a user interface 208. In some embodiments, the processor (and/or co-processors or any other processing circuitry assisting or otherwise associated with the processor) may be in communication with the memory device via a bus for passing information among components of the apparatus. The memory device may be non-transitory and may include, for example, one or more volatile and/or non-volatile memories. In other words, for example, the memory device may be an electronic storage device (for example, a computer readable storage medium) comprising gates configured to store data (for example, bits) that may be retrievable by a machine (for example, a computing device like the processor 202). The memory device may be configured to store information, data, content, applications, instructions, or the like, for enabling the apparatus to carry out various functions in accordance with an example embodiment of the present invention. For example, the memory device could be configured to buffer input data for processing by the processor. Additionally or alternatively, the memory device could be configured to store instructions for execution by the processor.

The processor 202 may be embodied in a number of different ways. For example, the processor may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 202 may be configured to execute instructions stored in the memory device 204 or otherwise accessible to the processor. Alternatively or additionally, the processor may be configured to execute hard coded functionality. As such, whether configured by hardware or software methods, or by a combination thereof, the processor may represent an entity (for example, physically embodied in circuitry) capable of performing operations according to an embodiment of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor specific device (for example, a mobile terminal or a fixed computing device) configured to employ an embodiment of the present invention by further configuration of the processor by instructions for performing the algorithms and/or operations described herein. The processor may include, among other things, a clock, an arithmetic logic unit (ALU) and logic gates configured to support operation of the processor.

The apparatus 200 of an example embodiment may also include a communication interface 206 that may be any means such as a device or circuitry embodied in either hardware or a combination of hardware and software that is configured to receive and/or transmit data to/from a communications device in communication with the apparatus, such as to facilitate communications with one or more OEM 104 or the like. In this regard, the communication interface may include, for example, an antenna (or multiple antennae) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware and/or software for supporting communication via cable, digital subscriber line (DSL), universal serial bus (USB) or other mechanisms.

The apparatus 200 may also include a user interface 208 that may in turn be in communication with the processor 202 to provide output to the user and, in some embodiments, to receive an indication of a user input. As such, the user interface may include a display and, in some embodiments, may also include a keyboard, a mouse, a joystick, a touch screen, touch areas, soft keys, one or more microphones, a plurality of speakers, or other input/output mechanisms. In one embodiment, the processor may comprise user interface circuitry configured to control at least some functions of one or more user interface elements such as a display and, in some embodiments, a plurality of speakers, a ringer, one or more microphones and/or the like. The processor and/or user interface circuitry comprising the processor may be configured to control one or more functions of one or more user interface elements through computer program instructions (for example, software and/or firmware) stored on a memory accessible to the processor (for example, memory device 204, and/or the like).

The apparatus 200 of some embodiments may be integrated with or otherwise on-board the vehicle whereby the apparatus 200 may be equipped with or in communication with (e.g., via communications interface 206) one or more sensors, such as a Global Navigation Satellite System (GNSS) sensor (e.g., GPS, Galileo, GLONASS, etc.), accelerometer, image sensor, inertial measurement unit (IMU), gyroscope, magnetic field sensor, etc. Any of the sensors may be used to sense information regarding the location, movement, positioning, or orientation of the apparatus for use in identifying a location of the apparatus 200. In some embodiments, the apparatus 200 may derive information regarding location, movement, position, or orientation of the apparatus 200 based on communication signals perceived by the communications interface 206 such as through signal triangulation or signal fingerprinting, for example. In some embodiments, the apparatus may combine both sensor information and communication signals to drive a location of the apparatus 200.

Location-based services (LBS) such as real-time traffic information, fleet management, and navigation among others, are based on the analysis of mobility data that users of such services provide. Mobility data is associated with a privacy level and accuracy value. An accuracy value is based on the intrinsic utility of data toward the generation of location-based services. The privacy value reflects the sensitive information that mobility data reveals about a user's habits, behaviors, and personal information such as their home and/or work address.

Location-based service providers endeavor to collect as much location data as possible to maximize the accuracy of the location-based services, while attempting to minimize the associated risks for the privacy of the users particularly as it relates to the inadvertent disclosure or misuse of data. To reduce the privacy risk, location-based service providers may apply privacy-enhancing algorithms on data. Privacy-enhancing algorithms function by removing or altering features of the data that may remove privacy, and this operation typically renders the data less accurate and thus less valuable for the location-based service provider.

Some location-based services, such as traffic speed and volume information, require low data latency, such that anonymization of trajectory data must be performed in real-time or near real-time. While historical traffic data can provide an indication of anticipated traffic, real-time and near real-time data provides an indication of the traffic that is occurring at that point in time. An example anonymization technique uses splitting and gapping of the trajectory, where the trajectory is only published to a location-based service provider after anonymization is applied. Anonymization in this manner splits input trajectory data into a number of sub-trajectories associated with different trajectory identifiers (IDs) and gaps are left between the sub-trajectories, such that it is not obvious for an adversary as to how to reconstruct a trajectory that has been split and gapped. The sizes of the sub-trajectories and gaps can be configured based on parameters of the anonymization algorithm and can be set or tuned according to the use case.

Embodiments described herein further enhance the process of splitting and gapping of trajectories by dynamically adjusting the parameters for the splitting and gapping based on an anticipated probe data density for a geographic area at a given time. The anticipated probe data density may be based on historical data. The anticipated probe data density can in some embodiments be supplemented by real-time or near real-time probe data density As described above, the historical probe data density for a given geographic region and time period may be observation data collected from a previous time period, aggregated over multiple time periods, and may be obtained from a variety of sources. The real-time probe data density may be observation data obtained from online sources which corresponds to the geographic region and time period for the respective probe data of the trajectory to be anonymized. The hybrid probe data density may be a combination of (weighted) historical and real-time probe, such that a historical probe data density can be supplemented with real-time or near real-time probe data density such as probe data counts to improve the accuracy of the probe data density which can account for anomalies relative to the historical probe data density.

Trajectory data as described herein is defined as a set of data points, each data point including a location and a timestamp. The location may be in the form of latitude and longitude, and potentially altitude. Additional information may be associated with a data point, such as speed, heading, etc. If a trajectory identifier, device identifier, or session identifier is associated with each point, the trajectory data can be partitioned into a set of trajectories, each of which identifies the movement of a user over a period of time.

Location-based service providers may provide trajectory data to customers, such as municipalities interested in traffic optimization, data producers (e.g., drivers who share their trajectory data with the service provider), or the like. Any trajectory that reveals a user's behavioral patterns (e.g., going from A to B) can potentially reveal privacy-sensitive information and locations. Embodiments described herein mitigate this issue by segmenting a trajectory and introducing gaps between the trajectory segments or sub-trajectories, and determining how the trajectory should be segmented and gapped based on a predicted or anticipated probe data density for the geographic location of the trajectory during the time the trajectory is being generated.

According to an example embodiment described herein, a vehicle may transmit their trajectory (e.g., through use of a mobile device 114 carried by or incorporated into the vehicle) in real time, where a probe data point is transmitted as it is measured/collected to an OEM 104. The OEM 104 may anonymize the trajectory data prior to release to a service provider. This anonymization may be due to regulatory requirements, agreed-upon terms of use, or user-preferences, for example. Location-based service providers may use the trajectory data to determine traffic congestion, identify road status (e.g., closed or open), update variable tolls with dynamic pricing, etc. For these services, it may be important to keep as many probe data points of a trajectory as possible. At the same time, it is important to maintain privacy of the trajectories.

An example embodiment of anonymization of a trajectory using splitting and gapping can include gathering probe data points over a period of time, where that period of time is defined as *"sub-trajectory_size"* seconds. This *sub-trajectory_size* parameter is a measure of time defining the duration over which data is collected before transmitting the sub-trajectory as a batch to a data provider, such as map service provider 116 of Figure 1. The *sub-trajectory_size* (and the gap size, start cut, and end cut detailed below) can be measured using distance (e.g., Euclidean, Haversine network, or route) or probe data point count, for example. Embodiments can include a size range for the sub-trajectory and randomly select a value within that range. The data provider can then anonymize the received data and provide the anonymized data to a service provider, such as a traffic data service provider or other provider that benefits from location and trajectory data.

In addition to the sub-trajectory size, the anonymization process requires a gap size defined as parameter *"gap_size".* The gap size parameter is the size of the gap that is introduced between sub-trajectories in the data, measured in seconds. In addition to splitting the trajectory into sub-trajectories of a certain size and introducing gaps of a certain size, embodiments can further anonymize trajectory data by using a start cut and an end cut. A start cut, identified as parameter *"start cut",* can include where a certain portion of the beginning of a trajectory is cut and not sent to a location-based service provider. This avoids potentially identifying an origin of a trajectory, which can be privacy sensitive. Similarly an end cut identified as parameter *"end_cut"* is an amount of a trajectory that is cut off and not sent to a location-based service provider to obfuscate a destination of a trajectory. A sampling rate may optionally be used as a parameter in the anonymization process whereby the sampling rate may be changed to provide a distinction between trajectories or sub-trajectories, for example.

An end cut relies upon knowing when the trajectory will end. As such, an end cut can be performed after a trajectory is complete, such as if there is some degree of latency between providing trajectory data to a service provider relative to real time. An end cut may also be performed when a destination is known, such as with a navigation system that generates a route to the destination. In these scenarios an end cut is feasible. If trajectory data is being provided in real time or near real time, it can be difficult to perform an end cut of a specific length. However, a destination can be estimated, such as using historical data. For example, if a user is driving to a workplace or home, the destination can be anticipated, and an end cut can be performed in anticipation of the trajectory ending at a known destination.

Embodiments may employ contextual clues to establish a probability of a trajectory approaching an end cut. Contextual clues may be used to calculate a probability of a trajectory approaching a destination or stay point within a predetermined distance. These contextual clues may include probe data point speeds, such as where speeds above 70 kilometers per hour (kph), for example, suggest a trajectory is not approaching a destination or stay point within a predetermined distance, while speeds below 25kph, for example, may suggest that the trajectory is approaching a destination or stay point within a predetermined distance. The probe data point speed context may be used together with a traffic density context to weight the respective context. For example, a speed below 25kph in dense traffic may negate the probability that the trajectory is approaching a destination or stay point within a predetermined distance.

Beyond probe data point speed and traffic context clues, the road functional class may provide a contextual clue. A trajectory is unlikely to have a destination or stay point on an interstate class of road unless such a stay point is at a rest stop. As such, probe data points of a trajectory traveling along an interstate may suggest a low probability of approaching a destination or stay point within a predetermined distance. Probe data points of a trajectory along a local road may indicate that the trajectory may be approaching a stay point within a predetermined distance. Further, contextual clues such as the type of area in which probe data points are found may influence the probability that a trajectory is approaching a stay point. For example, a destination or stay point may be relatively unlikely to be found in an industrial or rural zone, while a destination or stay point may be more likely in a residential or urban zone. Thus, the surroundings of a probe data point may influence the probability of a trajectory approaching a stay point. Further point-of-interest density around a probe data point may influence the probability that a trajectory is approaching a stay point. For example, a dense point-of-interest region is more likely to be associated with a stay point of a trajectory than a sparse point-of-interest region.

Each of the aforementioned contextual clues may be used in calculating a probability of a trajectory being within a predetermined distance of the end of a trajectory and may be used to determine an end cut. While some of the contextual clues may not provide a probability of a trajectory being within a predetermined distance of its end with a high reliability, the combination of contextual clues and/or properties of the probe data points themselves may be used to identify, with a relatively high confidence, a probability of a trajectory being within a predetermined distance of its end point.

Using the above parameters, embodiments provide anonymization for trajectories whether in real time, near real time, or after a trajectory is complete. The above-described example is one option for the relationship between sub-trajectory size, gap size, sampling rate, start cut, and end cut; however, embodiments provided herein can be implemented regardless of the parameters used and the relationship between these elements.

The aforementioned parameters for anonymization of trajectories is generally fixed in many anonymization strategies. However, as noted above, using fixed parameters can overly anonymize trajectory data received from an area having a high density of probe data, while fixed parameters can insufficiently anonymize trajectory data received from an area having sparse probe data. Embodiments described herein provide parameters for anonymization based on an anticipated probe data density.

A geographical region can be partitioned into a plurality of geographic sub-areas. The partitions can be predefined partitions, such as postal codes, map tiles, etc. Optionally, the partitions can be unique to embodiments of the system described herein which can partition a geographic region into a plurality of geographic sub-areas by any partitioning strategy, such as using a grid of predefined size. Map tiling schemes may include HERE tiling scheme, Google S2, Uber H3, quad-tree tiles, Geohash or the like. Geographical partitions can be of uniform or non-uniform shape and size and can be based on geographical features or areas, such as those mentioned in connection with map database 108. For example, partitions can include partitions around road segments. An interstate highway (e.g. Functional Class 1) through a suburban area may have significant probe data density at all times day and night and every day of the week. However, the suburban area through which the interstate runs may have a probe data density that fluctuates substantially. A geographical partition can isolate the interstate from the suburban area such that the probe data density of the interstate does not influence the probe data density of the suburban area for purposes of determining how to anonymize the probe data trajectories.

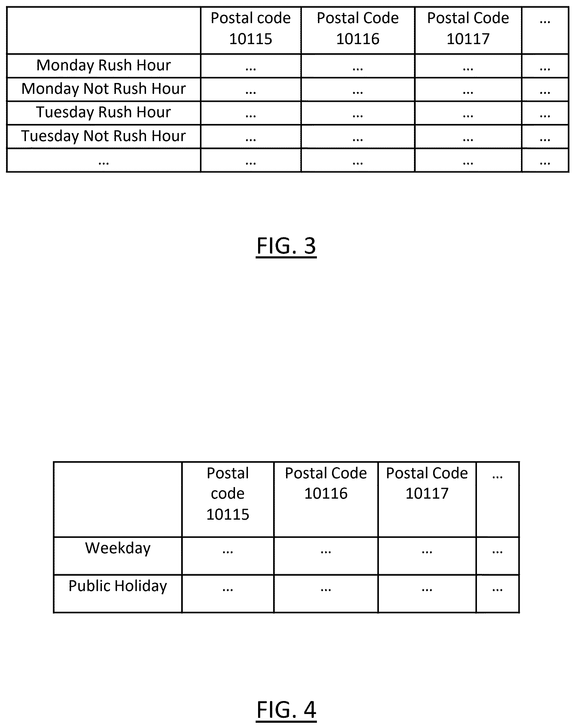

In addition to partitioning a geographic region, time can be partitioned into a plurality of temporal windows. The partitions can be based on the time of day, day of the week, season of the year, or the like. For example, partitions can partition a week into days of the week, and into temporal windows of during rush hour and outside of rush hour. During/outside rush hours may be defined individually for different locations. For example, a rush hour in Frankfurt may be defined as between 7.00 am and 9.00 am, while a rush hour in Berlin may be defined between 7.30am and 9.30am. Figure 3 illustrates an example embodiment of a table depicting columns reflecting the geographical partitions into geographic sub-areas corresponding to postal codes. The temporal partitions are reflected in rows including a day of the week and windows both during rush hour and outside of rush hour. Figure 4 illustrates a table that depicts geographical partitions into geographic sub-areas corresponding to postal codes and temporal partitions into time windows of whether the time is during a weekday or during a public holiday.

The temporal partitions can be widely varied and may change depending upon a region or country. For example, a beach town may have temporal partitions that reflect time windows on weekends in the off season, weekdays in the off season, weekends during the busy season, and weekdays during the busy season. A city may have a relatively consistent density pattern throughout the year, where time partitions may be weekday rush hour, weekday not rush hour, weekend, and holiday, for example. The time partitions may be further narrowed as needed such as down to per hour of the day. As will be appreciated by the disclosure herein, the temporal partitions can include any temporal partitions that define a distinction between time periods that have varying degrees of density between them.

A table having columns representing geographic sub-areas, and rows representing temporal windows, for each cell of the table a probe data density value can be generated. This can be generated based on historical measures of probe data density corresponding to the geographic sub-areas and time windows. This table can then be used to predict probe data density for a respective geographic sub-area during a time corresponding to the respective time window. The probe data density value can be a numerical value, such as a number of vehicles and/or mobile devices within the geographic sub-area or a number of probe data points, for example. The value may also be a range or density indicator, such as a binary indicator in the most basic form of high density or low density. The value reflecting the probe data density can be as basic as a binary indicator or as detailed as a specific number of probe data points, or any fidelity therebetween.

The probe data density can be calculated based on historical measurements for a single time window corresponding to a row of the table or over a number of time windows corresponding to the row. The probe data density can be updated periodically, such as each time that the time window of a row occurs the probe data density estimate can be updated. Further, this may use a rolling lookback window, such as through the prior three durations of that specific time window, for example. The updates to the probe data density can be made using any frequency deemed appropriate and may consider an availability of the probe density data, the resources for calculation, and privacy requirements.

Probe data density for a particular geographical area may not be available, such as in instances in which the probe data history is not available or data reliability is uncertain. In such cases, the probe data density may be estimated using neighboring geographic areas, or areas that have a similar geographical profile (e.g., similar population, similar zoning such as industrial, commercial, residential, similar road functional classes, etc.). Similarly, if probe data density for a particular time frame is not available, the probe data density from similar time frames may be employed, such as if probe data density for a particular geographic region in the time frame of a holiday is unavailable, the probe data density for a weekend may be used.

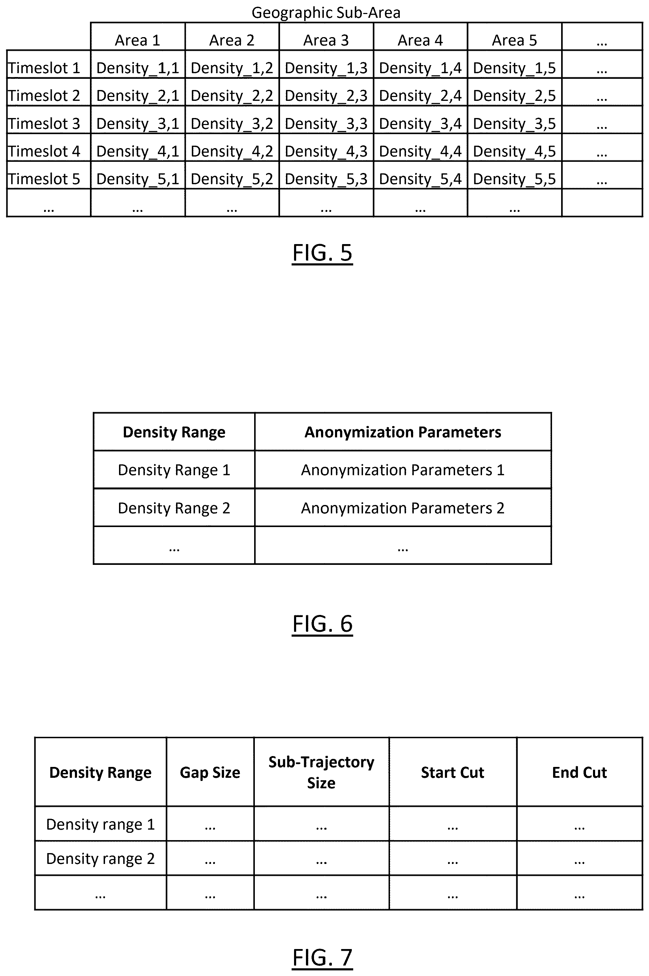

With an understanding of anticipated probe data density within each geographic sub-area at each timeslot, the anticipated probe data density can be determined for a location at a time of day. Figure 5 illustrates such an embodiment with geographic sub-areas including at least Areas 1-5 and Timeslots 1-5. As shown, the anticipated density for Area 3 in Timeslot 3 is Density _3,3, for example. The anonymization used on trajectory data gathered at a given geographic sub-area and timeslot can then be based upon this anticipated density.

The anonymization parameters used to anonymize data according to an anticipated probe data density can be established based on anonymization of trajectory data within various probe density areas and a measured anonymization or a re-identification risk. This can be done, for example, either by running an extensive set of experiments to measure the quality of anonymization for a range of anonymization parameters to find the optimal balance between privacy and utility based on probe data density within an area; or based on the privacy perception of the data provider.

The anonymization parameters applied to a given area at given timeslot may be based, for example, an a density range into which the density of that given area and timeslot fall. For example, as shown in Figure 6, an anticipated probe data density that falls into "Density Range 1" may employ "Anonymization Parameters 1" to anonymize trajectory data received during the given timeslot from the given geographic sub-area.

Figure 7 illustrates another strategy for providing anonymization parameters to trajectory data. With a given anticipated density for a given geographic sub-area and given timeslot, depending upon which Density Range the anticipated density falls in to, the corresponding anonymization parameters can be employed for a trajectory received during that timeslot in that geographic sub-area. As shown in Figure 7, those parameters include for the splitting and gapping: a gap size, a sub-trajectory size, a start cut size (e.g., time and/or distance), an end cut (e.g., time and/or distance), and a sampling rate. The end cut may only be available when a destination is known (e.g., via route planning) or an area of a destination is expected (e.g., from historical data).

An example embodiment described herein provides anonymization parameters to fill out either of the tables of Figures 6 or 7. To do so, an embodiment can automatically populate the tables. For example, a set of metrics evaluating a quality of anonymization may be defined. Traditionally, this set of metrics is based on a balance of utility and privacy of the data and may be specific to the use case of the data. A range and a step for every parameter of the anonymization is defined within the parameter space. Datasets can be collected or created such as by a machine learning process, to account for every density range. A dataset can be simulated, such as by pruning a dense dataset to reduce it to a sparse dataset. Experiments can then be run for every point in the parameter space (across the ranges of each anonymization parameter) for every dataset, and the optimal point determined from the defined set of metrics within the parameter space for the density range. The anonymization parameters can be rigidly tied to one another per the density range as in the table of Figure 6 or the anonymization parameters can be defined independently per the density range as in the table of Figure 7.

Embodiments described herein can optionally group sub-area and timeslots based on a common anticipated density or density range. For example, patterns and groups in density distribution table of timeslots and sub-areas may be determined and anonymization parameters applied to sets within those groups.

According to an example embodiment, a dimension N is defined as the number of desired groups of anonymization parameters. N groups are found by applying biclustering/co-clustering algorithms to get biclusters, which are subsets of rows which exhibit similar behavior across a subset of columns or vice versa. Additional algorithms can include block clustering, CTWC (Coupled Two-Way Clustering), ITWC (Interrelated Two-Way Clustering, δ-bicluster, δ-pCluster, δ-pattern, FLOC, OPC, Plaid Model, OPSMs (Order-preserving submatrixes), Gibbs, SAMBA (Statistical-Algorithmic Method for Bicluster Analysis), Robust Biclustering Algorithm (RoBA), Crossing Minimization, cMonkey, PRMs, DCC, LEB (Localize and Extract Biclusters), QUBIC (QUalitative BIClustering), BCCA (Bi-Correlation Clustering Algorithm) BIMAX, ISA and FABIA , runibic and EBIC, for example0 The input to the biclustering algorithm can include the geographic area (e.g., Area_i), timeslot (e.g., Timeslot_j), and probe data density (e.g., density_i_j). The output would be the biclusters (e.g., biclusters_k). Anonymization parameters can be assigned to each group based on its characteristic (e.g., average density in cluster). This can be assigned based on privacy perception (e.g., high density >= high privacy => simpler anonymization). Parameters can be further optimized by performing metric-based privacy analysis for each cluster separately. Defining parameters according to biclusters also has the advantage of requiring less space to store, and maintains the number N of groups smaller, such that these can be reasonably managed.

A quality of anonymization can be evaluated, at least in part, using a machine learning model trained to stitch together sub-trajectories for purpose of reidentification of the source of the trajectory. The more accurately a machine learning model can stitch together sub-trajectories, the worse anonymization is. Embodiments can improve the anonymization by determining the best parameters for anonymization that lead the machine learning model to fail to accurately stitch together sub-trajectories.

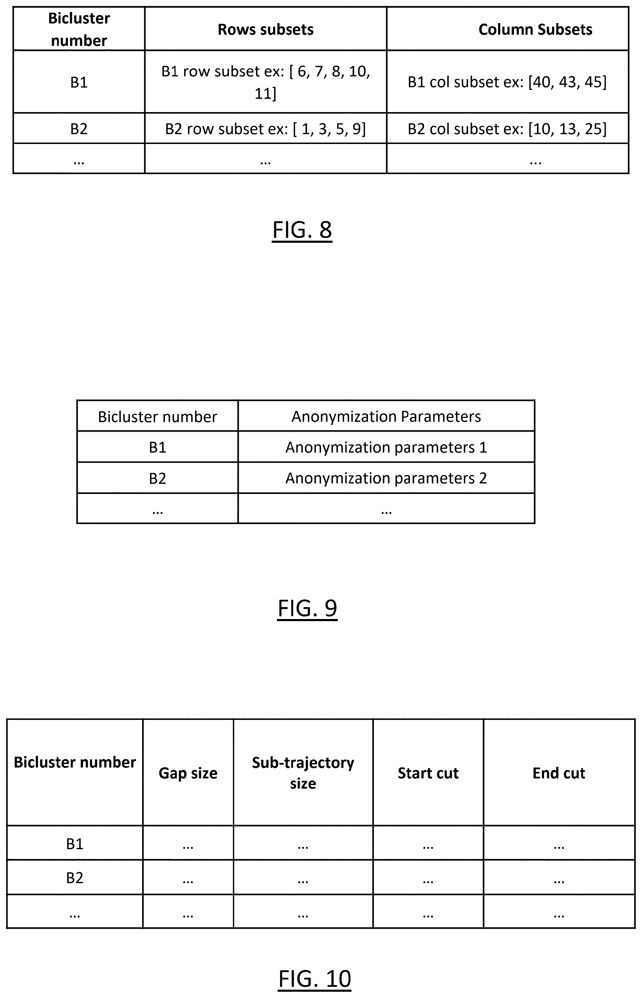

Figure 8 illustrates an example embodiment in which Cluster B1 includes a row subset and a column subset where densities are within the same range. Similarly, Cluster B2 includes a row subset and a column subset where densities are within the same range. The anonymization parameters can be rigidly tied to one another per the bicluster as in the table of Figure 9 or the anonymization parameters can be defined independently per the bicluster as in the table of Figure 10.

During anonymization, the tables, such as the tables of Figures 6, 7, 9, or 10 can be used to establish a set of anonymization parameters dependent upon the anticipated probe data density for a geographic sub-area. The anonymization may be performed using the tables as a look-up table to determine what anonymization parameters to use. The location (geographic sub-area) and the timeslot can be established based on the initial probe data of the trajectory and anonymization may begin based on the anticipated density at that location/timeslot.

Trajectories often cross from one geographic sub-area to another and/or from one timeslot to another. Embodiments can account for this by using each last point of a sub-trajectory to look-up anticipated density based on a current geographic sub-area of the last point and the timeslot. The anonymization parameters can then be adjusted for subsequent sub-trajectories. Alternatively, for every last point of a sub-trajectory, the anticipated probe data density can be looked up (based on timeslot and sub-area) and the gap size can be adjusted as necessary. For each first point of a sub-trajectory the density can be looked up, and the sub-trajectory size then adjusted as necessary.

Density can be added as an additional condition, along with speed, distance, and time to adjust the start cut size and end cut size provided there is sufficient information available to determine the end cut, or if the anonymization is performed for historical data anonymization.

The lookup tables, which can include any of the tables of Figures 3-10, can be used on a client-side (e.g., a mobile device or vehicle) when stored locally or on a server-side (e.g., map services provider or OEM). The tables can be updated periodically and if stored for client-side use, updated with the client at the same period or at a predefined update interval. The frequency at which these tables are updated and the granularity of the subdivisions (in both time and geographic area) can be customized based on the computational resources. For example, this information can be part of the map data supplied to a vehicle for navigation and stored as client-side map data. Additionally or alternatively, the information can be part of the map data supplied to a vehicle for performing anonymization on the mobile device. In such a scenario, a vehicle may locally implement a control mechanism that determines when to transmit a trajectory and when to suppress transmission such that a split-and-gap equivalent anonymization is achieved. A mobile device can determine its timestamped location, consult the anonymization parameters of the respective sub-area and timeslot (e.g., as downloaded in the map data), apply the anonymization strategy, and transmit the anonymized trajectory data to a service provider. The device can optionally determine if a next probe data point corresponds to a different sub-area in such case it may then employ the anonymization parameters from the new sub-area.

According to embodiments described herein, for a first geographic area and a first timeslot that is anticipated to have very high probe data density, the anonymization parameters may result in longer sub-trajectories and shorter gaps, along with potentially shorter start cuts and shorter end cuts. For a second geographic sub-area and a second timeslot that is anticipated to have moderate probe data density, the sub-trajectories may be shorter and the gaps longer, along with larger start cuts and end cuts. However, for a third geographic sub-area and a third timeslot that has sparse anticipated probe data, the sub-trajectories may be relatively short and the gaps relatively long, along with relatively long start cuts and end cuts. This ensures the privacy of the trajectory data that is anonymized is not overly anonymized in high probe data density areas, but not under-anonymized in low probe data density areas.

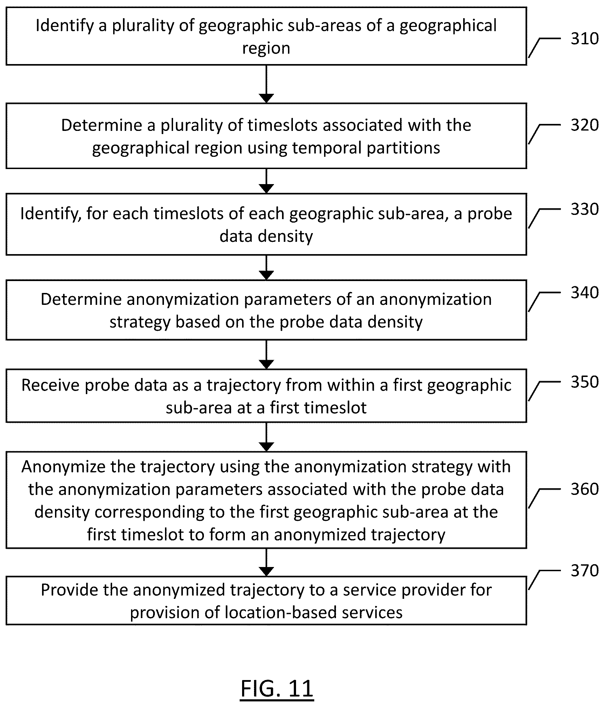

Figure 11 illustrates a flowchart depicting methods according to an example embodiments of the present disclosure. It will be understood that each block of the flowcharts and combination of blocks in the flowcharts may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory device 204 of an apparatus employing an embodiment of the present invention and executed by a processor 202 of the apparatus. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

Figure 11 illustrates a method of anonymizing trajectories using different anonymization parameters based on a density of probe data anticipated in a particular geographic sub-area at a particular time. In the illustrated embodiment, a plurality of geographic sub-areas of a geographical region are identified at 310. The geographical region may be subdivided in any number of ways, such as by map tiling scheme, postal code, neighborhood boundaries, road boundaries, etc., such as by processor 202 which may be embodied within an apparatus 200 functioning as a map service provider, for example.

A plurality of timeslots associated with the geographical region are determined at 320 using temporal partitions. This may be performed, for example, by the processor 202 of an apparatus 200 functioning as the map services provider 116. For each timeslot of each geographic sub-area, a probe data density is identified at 330. This can be based, for example, on historical data which may be stored in map database 108 of a map services provider 116. This can be based, for example, on historical probe data density for the geographical sub-areas at corresponding timeslots. At 340 anonymization parameters of an anonymization strategy are determined based on the probe data density. Probe data as a trajectory is received at 350 as a trajectory from within a first geographic sub-area at a first timeslot. This probe data can be received from a vehicle or mobile device traveling within the first geographic sub-area. The trajectory is anonymized at 360 using the anonymization strategy with the anonymization parameters associated with the probe data density corresponding to the first geographic sub-area at the first timeslot to form an anonymized trajectory. This may be performed, for example, by processor 202 of an apparatus 200 which may function as a mobile device 114, OEM 104, or map service provider 116. The anonymization can be performed by any of the entities described herein. The anonymized trajectory is provided to a service provider for provision of location-based services at 370. This may be provided through, for example, a communications interface 206.

In an example embodiment, an apparatus for performing the method of Figure 11 above may comprise a processor (e.g., the processor 202) configured to perform some or each of the operations (310-370) described above. The processor may, for example, be configured to perform the operations (310-370) by performing hardware implemented logical functions, executing stored instructions, or executing algorithms for performing each of the operations. Alternatively, the apparatus may comprise means for performing each of the operations described above. In this regard, according to an example embodiment, examples of means for performing operations 310-370 may comprise, for example, the processor 202 and/or a device or circuit for executing instructions or executing an algorithm for processing information as described above.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

The following numbered paragraphs are also disclosed:
1. A method comprising:
   identifying a plurality of geographic sub-areas of a geographical region;
   determining a plurality of timeslots associated with the geographical region using temporal partitions;
   identifying, for each timeslot of each geographic sub-area, a probe data density;
   determining anonymization parameters for an anonymization strategy based on the probe data density;
   receiving probe data as a trajectory from within a first geographic sub-area at a first timeslot;
   anonymizing the trajectory using the anonymization strategy with anonymization parameters associated with the probe data density corresponding to the first geographic sub-area at the first timeslot to form an anonymized trajectory; and
   providing the anonymized trajectory to a service provider for provision of location-based services.
2. The method of numbered paragraph 1, wherein the probe data density for each geographic sub-area at each timeslot is based at least in part on a historical probe data density for a respective geographic sub-area during a respective timeslot.
3. The method of numbered paragraph 1, wherein determining a plurality of timeslots associated with the geographical region using temporal partitions comprises:
   determining changes in probe data density based on at least one of time of day, day of week, or season of year; and
   establishing temporal partitions based on the at least one of time of day, day of week, or season of year and changes in probe data density.
4. The method of numbered paragraph 1, wherein the anonymization parameters comprise one or more of a sub-trajectory length, a gap length, a sub-trajectory length range, a gap length range, an origin cut off size, an origin cut off size range, an end cut off size, or an end cut off size range.
5. The method of numbered paragraph 4, wherein the sub-trajectory length defines at least one of a maximum length for a sub-trajectory of the trajectory or a minimum gap length to be shared for the provision of location-based services.
6. The method of numbered paragraph 1, wherein determining anonymization parameters based on the probe data density comprises:
   determining a density range into which the probe data density falls; and
   determining anonymization parameters based on the density range.
7. The method of numbered paragraph 6, wherein determining anonymization parameters based on the density range comprises:
   identifying the density range in a lookup table; and
   identifying anonymization parameters corresponding to the density range in the lookup table.
8. The method of numbered paragraph 1, wherein the probe data density comprises at least one of a volume of probe data points, a number of trajectories, a number of unique device identifiers, or a number of unique session identifiers received within a predefined period of time.
9. The method of numbered paragraph 1, wherein anonymizing the trajectory using the anonymization strategy with the anonymization parameters associated with the probe data density corresponding to the first geographic sub-area at the first timeslot to form an anonymized trajectory comprises:
   splitting the trajectory into two or more sub-trajectories; and
   introducing a gap between the two or more sub-trajectories.
10. The method of numbered paragraph 9, wherein determining the anonymization parameters based on the probe data density comprises:
   determining anonymization parameters associated with relatively smaller sub-trajectories and relatively longer gaps in response to the probe data density being relatively low density; and
   determining anonymization parameters associated with relatively larger sub-trajectories and relatively larger gaps in response to the probe data density being relatively high density.
11. A computer program product comprising at least one non-transitory computer-readable storage medium having computer-executable program code portions stored therein, the computer-executable program code portions comprising program code instructions configured to:
   identify a plurality of geographic sub-areas of a geographical region;
   determine a plurality of timeslots associated with the geographical region using temporal partitions;
   identify, for each timeslot of each geographic sub-area, a probe data density;
   determine anonymization parameters for an anonymization strategy based on the probe data density;
   receive probe data as a trajectory from within a first geographic sub-area at a first timeslot;
   anonymize the trajectory using the anonymization strategy with anonymization parameters associated with the probe data density corresponding to the first geographic sub-area at the first timeslot to form an anonymized trajectory; and
   provide the anonymized trajectory to a service provider for provision of location-based services.
12. The computer program product of numbered paragraph **11,** wherein the probe data density for each geographic sub-area at each timeslot is based at least in part on a historical probe data density for a respective geographic sub-area during a respective timeslot.
13. The computer program product of numbered paragraph **11,** wherein the program instructions to determine a plurality of timeslots associated with the geographical region using temporal partitions comprise program instructions to:
   determine changes in probe data density based on at least one of time of day, day of week, or season of year; and
   establish temporal partitions based on the at least one of time of day, day of week, or season of year and changes in probe data density.
14. The computer program product of numbered paragraph 11, wherein the anonymization parameters comprise one or more of a sub-trajectory length, a gap length, a sub-trajectory length range, a gap length range, an origin cut off size, an origin cut off size range, an end cut off size, or an end cut off size range.
15. The computer program product of numbered paragraph 14, wherein the sub-trajectory length defines at least one of a maximum length for a sub-trajectory of the trajectory or a minimum gap length to be shared for the provision of location-based services.
16. The computer program product of numbered paragraph 11, wherein the program instructions to determine anonymization parameters based on the probe data density comprise program instructions to:
   determine a density range into which the probe data density falls; and
   determine anonymization parameters based on the density range.
17. The computer program product of numbered paragraph 16, wherein the program instructions to determine anonymization parameters based on the density range comprise program instructions to:
   identify the density range in a lookup table; and
   identify anonymization parameters corresponding to the density range in the lookup table.
18. The computer program product of numbered paragraph 11, wherein the probe data density comprises at least one of a volume of probe data points, a number of trajectories, a number of unique device identifiers, or a number of unique session identifiers received within a predefined period of time.
19. The computer program product of numbered paragraph 11, wherein the program instructions to anonymize the trajectory using the anonymization strategy with the anonymization parameters associated with the probe data density corresponding to the first geographic sub-area at the first timeslot to form an anonymized trajectory comprise program instructions to:
   split the trajectory into two or more sub-trajectories; and
   introduce a gap between the two or more sub-trajectories.
20. An apparatus comprising at least one processor and at least one memory including computer program code, the at least one memory and computer program code configured to, with the processor, cause the apparatus to at least:
   identify a plurality of geographic sub-areas of a geographical region;
   determine a plurality of timeslots associated with the geographical region using temporal partitions;
   identify, for each timeslot of each geographic sub-area, a probe data density;
   determine anonymization parameters for an anonymization strategy based on the probe data density;
   receive probe data as a trajectory from within a first geographic sub-area at a first timeslot;
   anonymize the trajectory using the anonymization strategy with anonymization parameters associated with the probe data density corresponding to the first geographic sub-area at the first timeslot to form an anonymized trajectory; and
   provide the anonymized trajectory to a service provider for provision of location-based services.

## Claims

1. A computer-implemented method comprising:
identifying a plurality of geographic sub-areas of a geographical region;
determining a plurality of timeslots associated with the geographical region using temporal partitions;
identifying, for each timeslot of each geographic sub-area, a probe data density;
determining anonymization parameters for an anonymization strategy based on the probe data density;
receiving probe data as a trajectory from within a first geographic sub-area at a first timeslot;
anonymizing the trajectory using the anonymization strategy with anonymization parameters associated with the probe data density corresponding to the first geographic sub-area at the first timeslot to form an anonymized trajectory; and
providing the anonymized trajectory to a service provider for provision of location-based services.

2. The method of claim 1, wherein the probe data density for each geographic sub-area at each timeslot is based at least in part on a historical probe data density for a respective geographic sub-area during a respective timeslot.

3. The method of any preceding claim, wherein determining a plurality of timeslots associated with the geographical region using temporal partitions comprises:
determining changes in probe data density based on at least one of time of day, day of week, or season of year; and
establishing temporal partitions based on the at least one of time of day, day of week, or season of year and changes in probe data density.

4. The method of any preceding claim, wherein the probe data density is a hybrid probe data density, wherein the hybrid probe data density is a combination of historical probe data density and real-time or near real-time probe data density.

5. The method of any preceding claim, wherein the anonymization parameters comprise one or more of a sub-trajectory length, a gap length, a sub-trajectory length range, a gap length range, an origin cut off size, an origin cut off size range, an end cut off size, or an end cut off size range.

6. The method of claim 5, wherein the sub-trajectory length defines at least one of a maximum length for a sub-trajectory of the trajectory or a minimum gap length to be shared for the provision of location-based services.

7. The method of any preceding claim, wherein determining anonymization parameters based on the probe data density comprises:
determining a density range into which the probe data density falls; and
determining anonymization parameters based on the density range.

8. The method of claim 7, wherein a predetermined number of anonymization parameter groups are further determined using a biclustering algorithm.

9. The method of claim 7, wherein determining anonymization parameters based on the density range comprises:
identifying the density range in a lookup table; and
identifying anonymization parameters corresponding to the density range in the lookup table.

10. The method of claim 9, wherein the lookup table is periodically updated at a mobile device.

11. The method of any preceding claim, wherein the probe data density comprises at least one of a volume of probe data points, a number of trajectories, a number of unique device identifiers, or a number of unique session identifiers received within a predefined period of time.

12. The method of any preceding claim, wherein anonymizing the trajectory using the anonymization strategy with the anonymization parameters associated with the probe data density corresponding to the first geographic sub-area at the first timeslot to form an anonymized trajectory comprises:
splitting the trajectory into two or more sub-trajectories; and
introducing a gap between the two or more sub-trajectories.

13. An apparatus comprising means configured to perform a method according to any of claims 1 to 12.

14. A computer program product comprising computer-executable program code portions stored therein, the computer executable program code portions including program code instructions configured to perform a method according to any of claims 1 to 12.
